(19) Europäisches Patentamt
European Patent Office
Office européen des brevets

(11) **EP 4 667 525 A1**

(12) **EUROPEAN PATENT APPLICATION**

(43) Date of publication:
**24.12.2025  Bulletin 2025/52**

(21) Application number: **24183164.3**

(22) Date of filing: **19.06.2024**

(51) International Patent Classification (IPC):
***C08L 23/14*** *(2006.01)*

(52) Cooperative Patent Classification (CPC):
(C-Sets available)
**C08L 23/14;** C08L 2205/025; C08L 2207/02;
C08L 2207/20                                   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Poliolefine Italia S.r.l.
20121 Milano (IT)**

(72) Inventors:
• **CAVALIERI, Claudio
  44122 Ferrara (IT)**
• **HEES, Timo
  65926 Frankfurt/M. (DE)**

(74) Representative: **LyondellBasell
c/o Basell Poliolefine Italia
Intellectual Property
P.le Donegani 12
44122 Ferrara (IT)**

(54) **TRANSPARENT RECYCLED POLYPROPYLENE COMPOSITION**

(57)    A recycled polyolefin composition comprising:
A) from 20 wt% to 80 wt% of a recycled polypropylene component;
B) from 20 to 80 wt% of a propylene ethylene copolymer having:
the ethylene derived units content, measured by $^{13}$C-NMR, ranging from 1.8 wt% to 4.2 wt%.

EP 4 667 525 A1

**(Cont. next page)**

(52) Cooperative Patent Classification (CPC): (Cont.)

C-Sets
**C08L 23/14, C08L 23/14**

**Description**

FIELD OF THE INVENTION

The present disclosure relates to polypropylene compositions containing recycled material that can be used in preparation of extruded and molded articles.

BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow molded bottles and injection molded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a heterophasic polyolefin composition having flexural modulus equal to or lower than 600 MPa as a compatibilizer agent for a recycled polyolefin composition. In both cases, the effect of the compatibilizer was that of improving the mechanical properties while the optical properties had not been tested. In fact, improving the optical properties of polyolefin composition including substantial amounts of recycled material is a demanding task because the multiplicity of components chemically different to each other makes certain optical properties such as transparency difficult to be achieved at a satisfactory extent..

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers. Furthermore usually polymer compositions including recycled materials have poorer optical properties and a poor transparency and it would be desirable to improve these properties.

It has now been unexpectedly found that it is possible to have an improved property profile especially in terms of haze when a recycled polymer is added to a virgin polypropylene.

SUMMARY OF THE INVENTION

Thus an object of the present disclosure is a recycled polyolefin composition comprising:

A) from 20 wt% to 80 wt%; preferably from 25 wt% to 75 wt%, of a recycled polypropylene composition having:

i) ethylene derived units content, measured by $^{13}$C-NMR, ranging from 1.0 wt% to 4.2 wt%, preferably ranging from 1.4 wt% to 4.0 wt%, more preferably ranging from 1.6 wt% to 3.8 wt%

ii) 1-butene derived units content, measured by $^{13}$C-NMR, ranging from 1.5 wt% to 5.2 wt% , preferably ranging from 1.8 wt% to 5.0 wt%, more preferably ranging from 2.1 wt% to 4.8 wt%;

iii) ethylene derived units content of the fraction soluble in xylene at 25°C, measured by $^{13}$C-NMR, ranging from 6.0 wt% to 15.0 wt%, preferably ranging from 6.4 wt% to 14.3 wt%, more preferably ranging from 7.0 wt% to 13.4 wt%;

iv) 1-butene derived units content, of the fraction soluble in xylene at 25°C, measured by $^{13}$C-NMR, ranging from 2.8 wt% to 8.2 wt%, preferably ranging from 3.0 wt% to 7.8 wt%, more preferably ranging from 3.2 wt% to 7.2 wt%;

v) Melt Flow Rate, determined according to the method ISO 1133 (230° C, 2.16 kg), ranging from 5.0 g/10 min to 20.0 g/10 min; preferably from 7.0 g/10 min to 18.0 g/10 min, more preferably from 9.0 g/10 min to 16.5 g/10 min;

vi) Xylene Soluble fraction at 25°C ranging from 4.8 wt% to 10.7 wt%, preferably ranging from 5.3 wt% to 9.8 wt%, more preferably ranging from 6.2 wt% to 9.2 wt%.

vii) melting point measured by DSC according to ISO 11357-3, ranging from 135 °C to 149°C; preferably from 138°C to 148°C; more preferably from 140°C to 145°C;

(B) from 20 to 80 wt%, preferably from 25 wt% to 75 wt%, of a propylene ethylene copolymer having:

i) ethylene derived units content, measured by $^{13}$C-NMR, ranging from 1.8 wt% to 4.2 wt%, preferably ranging from 2.2 wt% to 3.8 wt%, more preferably ranging from 2.7 wt% to 3.5 wt%

ii) a Melt Flow Rate, determined according to the method ISO 1133 (230° C, 2.16 kg), ranging from 30.0 g/10 min to 85.0 g/10 min; preferably from 35.0 g/10 min to 80.0 g/10 min; more preferably from 38.0 g/10 min to 75.0 g/10 min;

iii) a Xylene Soluble fraction at 25°C, determined according to ISO 16152: 2005, ranging from 5.0 wt% to 8.5 wt%; preferably from 5.0 wt% to 8.0 wt%; more preferably from 5.5 wt% to 7.8 wt%;

wherein the Melt Flow Rate of the polyolefin composition, determined according to ISO 1133 (230° C, 2.16 kg), ranges from 18.0 g/10 min to 60.0 g/10 min; preferably from 20.0 g/10 min to 55.0 g/10 min, more preferably from 23.0 g/10 min to 50.0 g/10 min;

the sum of the amounts of (A) and (B) being referred to the total weight of (A) and (B) is 100.

DETAILED DESCRIPTION OF THE INVENTION

The recycled polypropylene composition A) can be a Post-Industrial Resin (PIR) or a Post-Consumer Resin (PCR).

Post-industrial waste (PIW) is a material diverted from the waste stream originating from a manufacturing process.

Post-industrial resin (PIR) refers to a plastic material originating from the mechanical recycling of a post-industrial waste (PIW).

Post-Consumer Resin (PCR) defined as recyclate derived from an end product that has completed its life cycle as a consumer item and would otherwise be disposed of as waste.

Preferably the recycled polypropylene composition component A) does not contain limonene.

Preferably the recycled polypropylene composition component A) contains a organic compound with a chemical structure based on isoquinoline, that serves as a dye, e.g. red.

Preferably the recycled polypropylene composition component A) has at least one of the following features:

i) Tensile modulus ranging between 700 MPa and 1200 MPa, preferably between 750 MPa and 1150 MPa; more preferably between 820 MPa and 1050 MPa;

ii) Charpy notched impact strength at 23°C ranging from 3.0 kJ/m$^2$ to 9.0 kJ/m$^2$, more preferably ranging from 3.8 kJ/m$^2$ to 8.5 kJ/m$^{2:}$ more preferably ranging from 4.8 kJ/m$^2$ to 8.0 kJ/m$^2$;

iii) Charpy notched impact strength at 0°C ranges from 1.3 kJ/m$^2$ to 3.3 kJ/m$^2$, preferably between from 1.5 kJ/m$^2$ to 3.0 kJ/m$^2$, more preferably between from 1.6 kJ/m$^2$ to 2.5 kJ/m$^2$;

iv) Elongation at break ranging from 400 % to 800 %; preferably from 500 % to 750 %, more preferably from 550 % to 700 %.

The recycled polyolefin composition according to the present disclosure preferably has a Tensile modulus ranging between 800 MPa and 1800 MPa, preferably between 850 MPa and 1500 MPa; more preferably between 900 MPa and 1200 MPa.

The recycled polyolefin composition preferably has a Charpy notched impact strength at 23°C ranging from 3.0 kJ/m$^2$ to 8.0 kJ/m$^2$, more preferably ranging from 3.8 kJ/m$^2$ to 7.0 kJ/m$^{2:}$ more preferably ranging from 4.2 kJ/m$^2$ to 6.5 kJ/m$^2$. The Charpy impact strength at 0°C ranges from 1.1 kJ/m$^2$ to 3.3 kJ/m$^2$, preferably between from 1.3 kJ/m$^2$ to 3.0 kJ/m$^2$, more preferably between from 1.5 kJ/m$^2$ to 2.7 kJ/m$^2$. The elongation at break ranges from 500 % to 1400 %; preferably from 600 % to 1300 %; more preferably from 650 % to 1250%.

The recycled polyolefin composition preferably has an haze ranging from 10 % to 30 %; preferably from 15% to 2.7%.

With the recycled polyolefin composition according to the present disclosure is possible in particular to achieve a material having very low haze and an improved elongation at break. In fact even when small amounts of component B is added the elongation at break is highly improved.

Preferably the recycled polyolefin composition according to the present disclosure comprises:

A) from 15 wt% to 40 wt%; preferably from 20 wt% to 38 wt%; more preferably from 25 wt% to 36 wt% of a recycled polypropylene composition component A) described above;

B) from 60 wt% to 85 wt%; preferably from 62 wt% to 80 wt%; more preferably from 64 wt% to 75 wt% of a propylene ethylene copolymer component B) described above;

the sum of the amounts of (A) and (B) being referred to the total weight of (A) and (B) is 100. With this composition it is possible to achieve a polyolefin composition having a very low haze.

Preferably the recycled polyolefin composition according to the present disclosure comprises:

A) from 60 wt% to 85 wt%; preferably from 62 wt% to 80 wt%; more preferably from 64 wt% to 75 wt% of a recycled polypropylene composition component A) described above;

B) from 15 wt% to 40 wt%; preferably from 20 wt% to 38 wt%; more preferably from 25 wt% to 36 wt%, of a propylene ethylene copolymer component B) described above; the sum of the amounts of (A) and (B) being referred to the total weight of (A) and (B) is 100. With this composition it is possible to achieve a polyolefin having an improved elongation at break.

Preferably the recycled polyolefin composition according to the present disclosure comprises:

A) from 40 wt% to 60 wt%; preferably from 42 wt% to 58 wt%; more preferably from 44 wt% to 56 wt% of a recycled polypropylene composition component A) described above;

B) from 40 wt% to 60 wt%; preferably from 42 wt% to 58 wt%; more preferably from 44 wt% to 56 wt% of a propylene ethylene copolymer component B) described above; the sum of the amounts of (A) and (B) being referred to the total weight of (A) and (B) is 100. With this composition it is possible to achieve an optimum balance between haze and elongation at break.

The term "copolymer" as used herein refers to polymers with two different recurring units in the chain. By "ambient temperature" and "room temperature" is meant a temperature of 25 °C.

By the term "crystalline polypropylene" is meant in the present application a propylene polymer having an amount of isotactic pentads (mmmm), measured by $^{13}$C-MNR on the fraction insoluble in xylene at 25° C, higher than 70 molar %; by "elastomeric" polymer is meant a polymer having solubility in xylene at ambient temperature higher than 50 wt%.

Component B) can be obtained by polymerizing propylene in presence of ethylene, with processes commonly known in the art. Component B for example can be commercially available such as Moplen RP398T and Moplen RP398U sold by Lyondellbasell.

Component B) can be prepared by polymerizing propylene in the presence of ethylene and of a catalyst comprising the product of the reaction between:

i) a solid catalyst component comprising Ti, Mg, Cl, and at least an internal electron donor compound;

ii) an alkylaluminum compound and,

iii) an external electron-donor compound; preferably the external donor compound has the general formula: $(R^7)_a(R^8)_b Si(OR^9)_c$, where a and b are integers from 0 to 2, c is an integer from 1 to 4 and the sum (a+b+c) is 4; $R^7$, $R^8$, and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25 wt%.

The amount of Ti may range from 0.5 to 7% and more preferably from 0.7 to 5wt. %.

According to one method, the solid catalyst component (i) can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold $TiCl_4$; the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et3Cl_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of $R^7$ and $R^8$ is selected from branched alkyl, cycloalkyl or aryl groups with 3-10 carbon atoms optionally containing heteroatoms and $R^9$ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, $R^8$ is a branched alkyl or cycloalkyl group, optionally containing heteroatoms, and $R^9$ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The final composition comprising the components (A) and (B) may be added with additives, fillers and pigments, commonly used in olefin polymers such as nucleating agents, extension oils, mineral fillers, clarifiers and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

If needed, the final composition comprising (A)+(B) can be subject to a chemical treatment with organic peroxides in order to lower the average molecular weight and increase the melt flow index up to the value needed for the specific application.

The following examples are given in order to illustrate, but not limit the present disclosure.

EXAMPLE

**Characterization methods**

**Melting temperature and crystallization temperature:** The melting point has been measured by using a differential scanning calorimetry (DSC) instrument according to ISO 11357-3, at scanning rate of 20 °C/min both in cooling and heating, on a sample of weight between 5 and 7 mg, under inert N2 flow. Instrument calibration made with Indium.

**Melt Flow Rate:** Determined according to the method ISO 1133-1 (230° C, 2.16 kg).

**Xylene-soluble fraction (XS) at 25°C:** Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.):** The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine $[\eta]$.

**Comonomer determination via $^{13}$C-NMR:** $^{13}$C-NMR spectra were acquired on a Bruker AV600 spectrometer equipped with cryo probe, operating at 150.91 MHz in the Fourier transform mode at 120 °C. The peak of the $S_{\delta\delta}$ carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane $d_2$ at 120 °C w. Each spectrum was acquired with a 90 ° pulse, 15 seconds of delay between pulses and CPD to remove $^1$H-$^{13}$C coupling. 512 transients were stored in 65 K data points using a spectral window of 9000 Hz. Triad distribution was obtained using the following relations:

$$XPX = 100 \ I_8 / \Sigma$$

$$XPE = 100 \ I_5 / \Sigma$$

$$EPE = 100 \ I_4 / \Sigma$$

$$XBX = 100 \ I_3 / \Sigma$$

$$XBE = 100 \ I_2 / \Sigma$$

$$XEX = 100 \ I_9 / \Sigma$$

$$XEE = 100 \ I_1 / \Sigma$$

$$EEE = 100 \ (0.5 \ I_7 + 0.25 \ I_6)/\Sigma$$

Where $\Sigma = I_8 + I_5 + I_4 + I_3 + I_2 + I_9 + I_1 + 0.5 \ I_7 + 0.25 \ I_6$

I are the areas of the corresponding carbon as reported in Table 1

and X can be Propylene or 1-Butene

The molar content of Ethylene, Propylene and 1-Butene is obtained from triads using the following relations:

$$P \ (m\%) = XPX + XPE + EPE$$

$$B \ (m\%) = XBX + XBE + EBE$$

$$E \ (m\%) = EEE + XEE + XEX$$

Molar content was transformed in weight using monomers molecular weight.

**Table 1 Assignments of the $^{13}$C-NMR spectrum of Ethylene/Propylene/1-Butene containing polymers**

| Number | Chemical Shift (ppm) | Carbon | Sequence |
|--------|---------------------|--------|----------|
| 1 | 37.64 - 37.35 | $S_{\alpha\delta}$ | PEE |
| 2 | 37.35 - 37.15 | $T_{\beta\delta}$ | XBE |
| 3 | 35.27 - 34.92 | $T_{\beta\beta}$ | XBX |
| 4 | 33.29 - 33.15 | $T_{\delta\delta}$ | EPE |
| 5 | 30.93 - 30.77 | $T_{\beta\delta}$ | XPE |
| 6 | 30.35 - 30.26 | $S_{\gamma\delta}$ | PEEE |
| 7 | 29.97 - 29.85 | $S_{\delta\delta}$ | EEE |
| 8 | 29.14 -28.31 | $T_{\beta\beta}$ | XPX |
| 9 | 24.88 - 24.14 | $S_{\beta\beta}$ | XEX |

**Samples for the mechanical** tests have been obtained according to ISO 1873-2:2007.

**Charpy notched impact:** determined according to ISO 179-1eA, and ISO 1873-2
**Elongation at yield:** measured according to ISO 527.
**Elongation at break:** measured according To ISO 527
**Stress at break:** measured according to ISO 527.
**Haze (on 1 mm plaque)**

According to the method used, 5x5 cm specimens are cut out from molded plaques of 1 mm thickness and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method. 75x75x1 mm plaques are molded with a GBF Plastinjector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Tensile Modulus** according to ISO 527-2.

**Component A)**

Component A) is a PCR derived from protective packaging waste and contains 2,9-bis(3,5-dimethylphenyl) anthra[2,1,9-def:6,5,10-d'e'f]diisoquinoline-1,3,8,10(2H,9H)-tetrone having the features reported in Table 1.

Table 1

|  |  | A1 |
|---|---|---|
| MFR 2.16 kg/230°C | g/10' | 11.20 |
| Density | kg/dm3 | 0.900 |
| XS | % | 7.50 |
| Tm | °C | 142.9 |
| Tc | °C | 108.2 |
| Hc | J/g | -77.2 |
| Hm | J/g | 69.4 |
| C2 (NMR) | wt% | 1.90 |
| C4 (NMR) | wt% | 4.70 |
| C2-(XS fraction) (NMR) | wt% | 7.57 |
| C4-(XS fraction) (NMR) | wt% | 6.57 |
| Tensile Modulus | N/mm$^2$ | 915 |
| Charpy Impact @ 23°C | kJ/m$^2$ | 7.2 |
| Charpy Impact @ 0°C | kJ/m$^2$ | 2.3 |
| Elongation at break | % | 640 |

**Component B**

Component B is a commercial propylene ethylene copolymer sold by Lyondellbasell under the tradename of Moplen RP398T (B1) and Moplen RP398U (B2). The features of the components are reported in Table 2.

Table 2

|  |  | **B1** | **B2** |
|---|---|---|---|
| MFR 2.16 kg/230°C | g/10min | 41 | 71 |
| XS | % | 6.2 | 7.0 |
| C2 (NMR) | wt% | 3.0 | 3.3 |
| Charpy Impact @ 23°C | kJ/m$^2$ | 5.0 | 5.0 |
| Charpy Impact @ 0°C | kJ/m$^2$ | 2.5 | 1.5 |

**Comparative component A2**

Comparative component A2 is PCR derived from packaging waste, mainly crates. It contains polypropylene and polyethylene. The features are reported in Table 3.

Table 3

|  |  | **A2** |
|---|---|---|
|  |  |  |
| MFR 230°C/2. 16kg | g/10min | 21.0 |
| XS | % | 11.5 |
| Tm | °C | 163; 124 |
| Tensile Modulus | N/mm2 | 1360 |
| Charpy Impact @ 23°C | kJ/m$^2$ | 8.2 |
| Elongation at break | % | 50 |

**Examples 1-3 and comparative examples 4-5**

Components A and B have been blended with the amounts indicated in Table 4

Table 4

|  | Ex 1 | Ex 2 | Ex 3 | Comp Ex 4 | Comp Ex 5 |
|---|---|---|---|---|---|
| Component A1 | 30 | 50 | 70 | - | - |
| Component A2 | - | - | - | 50 | 30 |
| Component B1 | 70 | - | - | 50 | 70 |
| Component B2 | - | 50 | 30 | - | - |

The features of the composition of examples are reported in table 5

Table 5

|  | Units | Ex 1 | Ex 2 | Ex 3 | Comp Ex 4 | Comp Ex 5 |
|---|---|---|---|---|---|---|
| Melt Flow Rate | g/10min | 33 | 39 | 26.9 | 33 | 22.1 |
| Charpy 23°C | kJ/m$^2$ | 5 | 4.7 | 4.8 | 5.4 | 4.8 |
| Charpy 0°C | kJ/m$^2$ | 2.2 | 1.9 | 1.8 | 3.3 | 2.8 |

(continued)

|  | Units | Ex 1 | Ex 2 | Ex 3 | Comp Ex 4 | Comp Ex 5 |
|---|---|---|---|---|---|---|
| Tensile Modulus | MPa | 1060 | 1120 | 1050 | 1290 | 1240 |
| Elongation at break | % | 700 | 740 | 1100 | 24 | 837 |
| Haze | % | 18.1 | 21.9 | 23.1 | 92.9 | 77 |

Haze of the examples according to the invention is considerably lower with respect to the comparative examples, Example 3 contains only 30 wt% of component B, but has the higher elongation at break, higher that one of component A. This confirm the synergic effect between component A and B at least with respect to the elongation at break.

**Claims**

1.  A) from 20 wt% to 80 wt%; of a recycled polypropylene composition having:

    i) ethylene derived units content, measured by $^{13}$C-NMR, ranging from 1.0 wt% to 4.2 wt%
    ii) 1-butene derived units content, measured by $^{13}$C-NMR, ranging from 1.5 wt% to 5.2 wt% ,
    iii) ethylene derived units content of the fraction soluble in xylene at 25°C, measured by $^{13}$C-NMR, ranging from 6.0 wt% to 15.0 wt%,
    iv) 1-butene derived units content, of the fraction soluble in xylene at 25°C, measured by $^{13}$C-NMR, ranging from 2.8 wt% to 8.2 wt% ,
    v) Melt Flow Rate, determined according to the method ISO 1133 (230° C, 2.16 kg), ranging from 5.0 g/10 min to 20.0 g/10 min;
    vi) Xylene Soluble fraction at 25°C ranging from 4.8 wt% to 10.7 wt%,
    vii) melting point measured by DSC according to ISO 11357-3, ranging from 135 °C to 149 °C; (B) from 20 wt% to 80 wt%; of a propylene ethylene copolymer having:

    i) ethylene derived units content, measured by $^{13}$C-NMR, ranging from 1.8 wt% to 4.2 wt% ,
    ii) a Melt Flow Rate, determined according to the method ISO 1133 (230° C, 2.16 kg), ranging from 30.0 g/10 min to 85.0 g/10 min;
    iii) a Xylene Soluble fraction at 25°C, determined according to ISO 16152: 2005, ranging from 5.0 wt% to 8.5 wt%

    wherein the Melt Flow Rate of the polyolefin composition, determined according to the method ISO 1133 (230° C, 2.16 kg), ranges from 18.0 g/10 min to 60.0 g/10 min;
    the sum of the amounts of (A) and (B) being referred to the total weight of (A) and (B) is 100.

2.  The recycled polyolefin composition according to claim 1 wherein:

    component (A) ranges from 25 wt% to 75 wt%;
    component (B) ranges from 25 wt% to 75 wt%.

3.  The recycled polyolefin composition according to anyone of claims 1-2 wherein component A) has ethylene derived units content, measured by 13C-NMR, ranging from 1.4 wt% to 4.0 wt%.

4.  The recycled polyolefin composition according to anyone of claims 1-3 wherein component A) has 1-butene derived units content, measured by 13C-NMR, ranging from 1.8 wt% to 5.0 wt%.

5.  The recycled polyolefin composition according to anyone of claims 1-4 wherein component (A) has the ethylene derived units content of the fraction soluble in xylene at 25°C, measured by 13C-NMR, ranging from 6.4 wt% to 14.3 wt%.

6.  The recycled polyolefin composition according to anyone of claims 1-5 wherein component (A) has 1-butene derived units content, of the fraction soluble in xylene at 25°C, measured by 13C-NMR, ranging from 3.0 wt% to 7.8 wt%.

7.  The recycled polyolefin composition according to anyone of claims 1-6 wherein component (B) has a Melt Flow Rate, determined according to the method ISO 1133 (230° C, 2.16 kg), ranging from 35.0 g/10 min to 80.0 g/10 min.

8. The recycled polyolefin composition according to anyone of claims 1-7 wherein component (B) has the ethylene derived units content, measured by 13C-NMR, ranging from 2.2 wt% to 3.8 wt%.

9. The recycled polyolefin composition according to anyone of claims 1-8 wherein component (B) has a Xylene Soluble fraction at 25°C, determined according to ISO 16152: 2005, ranging from 5.0 wt% to 8.0 wt%.

10. The recycled polyolefin composition according to anyone of claims 1-9 wherein: component (A) ranges from 15 wt% to 40 wt%; component (B) ranges from 60 wt% to 85 wt%.

11. The recycled polyolefin composition according to anyone of claims 1-10 wherein: component (A) ranges from 60 wt% to 85 wt%; component (B) ranges from 15 wt% to 40 wt%.

12. The recycled polyolefin composition according to anyone of claims 1-11 wherein in component A) the Xylene Soluble fraction at 25°C ranges from 6.2 wt% to 9.2 wt%.

13. The recycled polyolefin composition according to anyone of claims 1-12 wherein in component A) melting point measured by DSC according to ISO 11357-3, ranges from 138°C to 148°C.

14. The recycled polyolefin composition according to anyone of claim 1-13 wherein component A) contains: 2,9-bis(3,5-dimethylphenyl)anthra[2,1,9-def:6,5,10-d'e'f]diisoquinoline-1,3,8,10(2H,9H)-tetrone.

15. An injection molded article made from recycled polyolefin composition according to claims 1-14.

European Patent Office

# EUROPEAN SEARCH REPORT

Application Number
EP 24 18 3164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/112029 A1 (BASELL POLIOLEFINE ITALIA SRL [IT]) 2 June 2022 (2022-06-02)<br>* example 1 *<br>* claim 1 *<br>* paragraphs [0001], [0009] *<br>----- | 1-15 | INV.<br>C08L23/14 |
| A | EP 3 553 096 B1 (BOREALIS AG [AT]) 18 March 2020 (2020-03-18)<br>* example IE2; table 2 *<br>* claim 1 *<br>* paragraph [0001] *<br>----- | 1-15 | |
| A | US 2024/101735 A1 (WANG JINGBO [AT] ET AL) 28 March 2024 (2024-03-28)<br>* claim 1 *<br>* paragraphs [0001], [0007] *<br>----- | 1-15 | |

TECHNICAL FIELDS SEARCHED (IPC)

C08L

The present search report has been drawn up for all claims

| Place of search | Date of completion of the search | Examiner |
|---|---|---|
| Munich | 27 November 2024 | van Bergen, Marc |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3164

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| WO 2022112029 | A1 | 02-06-2022 | CN | 116406402 A | 07-07-2023 |
| | | | EP | 4251694 A1 | 04-10-2023 |
| | | | JP | 2023545216 A | 26-10-2023 |
| | | | KR | 20230079235 A | 05-06-2023 |
| | | | US | 2024010823 A1 | 11-01-2024 |
| | | | WO | 2022112029 A1 | 02-06-2022 |
| EP 3553096 | B1 | 18-03-2020 | CN | 111971312 A | 20-11-2020 |
| | | | EP | 3553096 A1 | 16-10-2019 |
| | | | KR | 20200130355 A | 18-11-2020 |
| | | | PT | 3553096 T | 05-06-2020 |
| | | | RU | 2768893 C1 | 25-03-2022 |
| | | | US | 2022049078 A1 | 17-02-2022 |
| | | | WO | 2019197357 A1 | 17-10-2019 |
| US 2024101735 | A1 | 28-03-2024 | CN | 116710494 A | 05-09-2023 |
| | | | CN | 116848154 A | 03-10-2023 |
| | | | CN | 116848155 A | 03-10-2023 |
| | | | EP | 4036129 A1 | 03-08-2022 |
| | | | EP | 4288467 A1 | 13-12-2023 |
| | | | EP | 4288468 A1 | 13-12-2023 |
| | | | EP | 4288469 A1 | 13-12-2023 |
| | | | PL | 4036129 T3 | 06-11-2023 |
| | | | PT | 4036129 T | 11-09-2023 |
| | | | US | 2024101735 A1 | 28-03-2024 |
| | | | US | 2024101771 A1 | 28-03-2024 |
| | | | US | 2024279408 A1 | 22-08-2024 |
| | | | WO | 2022167107 A1 | 11-08-2022 |
| | | | WO | 2022167108 A1 | 11-08-2022 |
| | | | WO | 2022167368 A1 | 11-08-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5030662 A
- WO 2007071494 A
- US 4522930 A
- EP 045977 A2
- WO 0063261 A
- WO 0157099 A
- US 4399054 A
- US 4469648 A

### Non-patent literature cited in the description

- **HUGGINS, M.L.** *J. Am. Chem. Soc.*, 1942, vol. 64, 2716
- **C.J. CARMAN** ; **R.A. HARRINGTON** ; **C.E. WILKES**. *Macromolecules*, 1977, vol. 10 (3), 536